# EUROPÄISCHE PATENTANMELDUNG

(11) **EP 4 246 102 A1**
(43) Veröffentlichungstag der Anmeldung: **20.09.2023**
(21) Anmeldenummer: 22162886.0
(22) Anmeldetag: 18.03.2022
(51) Int. Cl.: G01G 19/03, G01G 21/22

(54) **VORRICHTUNG UND VERFAHREN ZUM WIEGEN VON GEGENSTÄNDEN**

(71) Anmelder: NORDISCHER MASCHINENBAU RUD. BAADER GMBH + CO KG, 23560 Lübeck (DE)
(72) Erfinder: Fleischmann, Julia, 23560 Lübeck (DE)
(74) Vertreter: Stork Bamberger Patentanwälte PartmbB

(57) **Zusammenfassung**

Die Erfindung betrifft eine Vorrichtung (10) zum Wiegen von Gegenständen (11) unterschiedlicher Länge L_{G1}, L_{G2}, L_{Gn}, umfassend eine Transporteinrichtung (12) mit mindestens einem Transportelement (13) zum Transportieren der Gegenstände (11) in eine Transportrichtung T, eine unterhalb des mindestens einen Transportelements (13) angeordnete Wägeeinrichtung (14) mit einer Wägeplatte (15), umfassend mindestens zwei hintereinander angeordnete Wägeplattensegmente (16, 17, 18), wobei die mindestens zwei Wägeplattensegmente (16, 17, 18) jeweils eine Länge L_{W1}, L_{W2}, Lwn aufweisen, eine der Wägeeinrichtung (14) in Transportrichtung T vorgelagerte Erfassungseinrichtung (19) mit mindestens einer Erfassungseinheit (20) zum Erfassen der Länge der Gegenstände (11), die sich dadurch auszeichnet, dass das in Verlauf der Transportrichtung T erste Wägeplattensegment (16) mindestens eine Wägezelle (21) umfasst und zum Erzeugen eines Wägesignals eines Gegenstandes (11) mit einer maximalen Länge L_{G1} ausgebildet, und dass das weitere in Verlauf der Transportrichtung T dem ersten Wägeplattensegment (16) nachgeordnete Wägeplattensegment (17) mittels eines mindestens eine Wägezelle (22) umfassenden Verbindungselements (24) mit dem ersten Wägeplattensegment (16) verbunden ist, und zum Erzeugen eines Wägesignals eines Gegenstandes (11) mit einer maximalen Länge L_{G1} und/oder L_{G2} ausgebildet ist. Die Erfindung betrifft des Weiteren ein entsprechendes Verfahren.

## Beschreibung

Die Erfindung betrifft eine Vorrichtung, ausgebildet und eingerichtet zum Wiegen von Gegenständen unterschiedlicher Länge L_{G1}, L_{G2}, L_{Gn} insbesondere von Lebensmitteln, umfassend eine Transporteinrichtung mit mindestens einem Transportelement, ausgebildet und eingerichtet zum Transportieren der Gegenstände mit einer Transportgeschwindigkeit in eine Transportrichtung T, eine unterhalb des mindestens einen Transportelements angeordnete Wägeeinrichtung, ausgebildet und eingerichtet zur Ermittlung des Gewichts des mittels der Transporteinrichtung transportierten Gegenstandes, wobei die Wägeeinrichtung eine Wägeplatte, umfassend mindestens zwei separate, unterhalb des mindestens einen Transportelements in Transportrichtung T hintereinander angeordnete Wägeplattensegmente, umfasst, wobei die mindestens zwei Wägeplattensegmente jeweils eine Länge L_{W1}, L_{W2}, L_{Wn} aufweisen, eine der Wägeeinrichtung in Transportrichtung T vorgelagerte Erfassungseinrichtung mit mindestens einer Erfassungseinheit, ausgebildet und eingerichtet zumindest zum Erfassen der Länge L_{G1}, L_{G2}, L_{Gn} der Gegenstände.

Weiterhin betrifft die Erfindung ein Verfahren zum Wiegen von Gegenständen unterschiedlicher Länge L_{G1}, L_{G2}, L_{Gn}, insbesondere von Lebensmitteln, umfassend die Schritte Transportieren der Gegenstände mit einer Transportgeschwindigkeit entlang einer Transportrichtung T mittels einer Transporteinrichtung mit mindestens einem Transportelement, Ermitteln des Gewichts der mittels der Transporteinrichtung transportierten Gegenstände durch eine Wägeeinrichtung, wobei die Wägeeinrichtung eine Wägeplatte, umfassend mindestens zwei separate, unterhalb des mindestens einen Transportelements in Transportrichtung T hintereinander angeordnete Wägeplattensegmente, umfasst, wobei die mindestens zwei Wägeplattensegmente jeweils eine Länge L_{W1}, L_{W2}, L_{Wn} aufweisen, Erfassen der Länge L_{G1}, L_{G2}, L_{Gn} der Gegenstände mittels einer der Wägeeinrichtung in Transportrichtung T vorgelagerten Erfassungseinrichtung mit mindestens einer Erfassungseinheit.

Vorrichtung und Verfahren zum Wiegen von Gegenständen sind seit vielen Jahren aus dem Stand der Technik bekannt und dienen insbesondere der spezifischen Ermittlung eines Gewichts der entsprechenden Gegenstände. Derartige Vorrichtungen und Verfahren kommen in einer Vielzahl von unterschiedlichen Industriezweigen zum Einsatz und sind immer dann erforderlich, wenn das Gewicht der verarbeiteten Gegenstände einen wesentlichen Prozessparameter darstellt.

Im industriellen Einsatz von Wägevorrichtungen gibt es Einsatzbereiche, in denen die zu wiegenden Gegenstände unterschiedliche Längen oder Breiten aufweisen, was dazu führt, dass die Wägeplatten in ihren Abmessungen derart groß gewählt sein müssen, dass eine große Bandbreite an Gegenständen mit nur einer einzigen Wägevorrichtung gewogen werden können. Derartige Wägevorrichtungen sind allerdings fehleranfällig bzw. führen lediglich in einem bestimmten/engen Bereich von Längen der Gegenstände zu zuverlässigen Messwerten. Gerade bei den Grenzbereichen der Gegenstände, die noch mit derartigen Wägeplatten erfassbar sind, ist eine genau Gewichtsermittlung nicht immer gegeben. Darüber hinaus benötigen derartige Wägevorrichtungen einen großen Platzbedarf, da eine gewisse Länge vorgehalten werden muss, die nur für einen geringen Anteil der Gegenstände benötigt wird. Standardmäßig wird in Bandlaufrichtung pro Transportvorrichtung eine Wägeplatte eingesetzt, die eine definierte Länge für eine Vielzahl an Gegenständen unterschiedlicher Länge aufweist. Weiterhin führen zu lange Wägeplatten für die zu wiegenden Gegenstände zu einer längeren Wiegedauer (Dauer der Gegenstände auf der Wägeplatte zur Gewichtsermittlung) bei den gesamten Gegenständen, da zwischen den jeweiligen Gegenständen jeweils ausreichend Abstand bereitgehalten werden muss, so dass sich nur ein Gegenstand zur selben Zeit auf der Wägeplatte befindet, was zu einem geringeren Durchsatz und einem ineffizienten Wiegevorgang der Gegenstände führt.

Um unterschiedlich breite Gegenstände zu wiegen ist aus der EP 1 952 103 B2 ein Verfahren sowie eine Vorrichtung zur Durchführung des Verfahrens zum Wiegen wenigstens eines relativ zu mehreren Wägezellen bewegbaren oder bewegten Objekts bekannt, wobei die mehreren Wägezellen im Wesentlichen nebeneinander quer zur Bewegungsrichtung angeordnet werden und die beim Wiegen des wenigstens einen Objekts entstehenden Wägesignale miteinander gekoppelt werden können. Derartige Verfahren oder Vorrichtungen eignen sich, aufgrund der quer zur Bewegungsrichtung angeordnete Wägezellen, nur zum Wiegen von Objekten unterschiedlicher Breite bezogen auf die Transportrichtung. Die maximale Länge der zu wiegenden Objekte ist durch die Länge der Wägezelle limitiert und ist nicht für entsprechend längere Objekte ausführbar.

Mit den herkömmlichen Vorrichtungen zum Wiegen von Gegenständen ist es bei kleinen Abständen zwischen Gegenständen nicht möglich, unterschiedlich lange Gegenstände bei konstanter Transportgeschwindigkeit zu wiegen, da die Wägeplatte und die Abstände zwischen den zu wiegenden Gegenständen für den längst möglichen Gegenstand ausgelegt sein müssen, um dieses komplett zu wiegen. Die Länge der Wägeplatte ergibt sich dabei aus der maximalen Gegenstandslänge und der Strecke, die in der Messzeit zurückgelegt werden muss, wobei sich ein Gegenstand komplett auf der Wägeplatte befinden muss, um ein genaues Messergebnis zu erzielen. Soll nun ein kürzerer Gegenstand auf der gleichen Wägeplatte gewogen werden, muss der Abstand zwischen den Gegenständen um die Differenz zur maximalen Produktlänge erhöht werden, damit ein aussagekräftiges Gewicht ermittelbar ist, bzw. damit sich nicht zwei Gegenstände gleichzeitig auf der Wägeplatte befinden. Mit den bekannten Vorrichtungen ergeben sich auf diese Weise Unterschiede bei den benötigten Abständen zwischen den zu wiegenden Gegenständen, die insbesondere bei großen Schwankungen der Länge zu Störungen im Verarbeitungsprozess führen können.

Derartige unterschiedliche Längen bei Gegenständen treten insbesondere im Bereich der Lebensmittelindustrie auf, beispielsweise bei der Verarbeitung von natürlichen Produkten. Insbesondere die fisch- oder fleischverarbeitende Industrie ist häufig mit unterschiedlich großen, langen oder schweren Produkten konfrontiert. Es wird beispielsweise bei der Verarbeitung von Weißfisch eine Lösung zu diesem Problem benötigt, da die Filetlängen stark variieren und die Geschwindigkeit des Transportsystems nicht beliebig angepasst werden kann, um die Verweilzeit eines Filets auf der Wägeplatte anzupassen, da es den Gesamtablauf einer Verarbeitungslinie stören würde. In weiteren Prozessschritten werden regelmäßig niedrigere Transportgeschwindigkeiten benötigt, weshalb ein Abbremsen der Transportgeschwindigkeit zu einem Stauchen der Filets führen würde, welches sich negativ auf die weitere Verarbeitung auswirken würde. Gleichzeitig kann der Abstand aufgrund der Durchsatzanforderungen nicht vergrößert werden, da ansonsten keine ausreichende Anzahl an Filets an den weiteren Bearbeitungsstationen verfügbar sind.

Es ist daher Aufgabe der vorliegenden Erfindung eine Vorrichtung zum Wiegen von Gegenständen bereitzustellen, welche zuverlässige Ergebnisse bei der Gewichtsermittlung von unterschiedlich langen Gegenständen bei einem Transport in Längsrichtung ermöglicht und dabei gleichzeitig einen hohen Durchsatz von Gegenständen bereithält. Die Aufgabe besteht weiterhin darin, ein entsprechendes Verfahren vorzuschlagen.

Diese Aufgabe wird durch die eingangs genannte Vorrichtung zum Wiegen von Gegenständen dadurch gelöst, dass das in Verlauf der Transportrichtung T erste Wägeplattensegment mindestens eine Wägezelle umfasst und zum Erzeugen eines Wägesignals eines Gegenstandes mit einer maximalen Länge L_{G1} ausgebildet und eingerichtet ist, und dass das weitere in Verlauf der Transportrichtung T dem ersten Wägeplattensegment nachgeordnete Wägeplattensegment mittels eines mindestens eine Wägezelle umfassenden Verbindungselements mit dem ersten Wägeplattensegment verbunden ist, und zum Erzeugen eines Wägesignals eines Gegenstandes mit einer maximalen Länge L_{G1} und/oder L_{G2} ausgebildet und eingerichtet ist.

Durch die erfindungsgemäße Vorrichtung wird sichergestellt, dass unterschiedlich lange Gegenstände mit einer maximalen Länge L_{G1} und/oder L_{G2}, was vorzugsweise jeweils im Wesentlichen der maximal entsprechenden Länge der Wägeplattensegmente L_{W1} bzw. L_{W1} + L_{W2} entspricht, mit einer einzigen Vorrichtung genau und zuverlässig gewogen werden können. Die mindestens zwei Wägeplattensegmente umfassende Wägeplatte definiert dabei den Wägebereich für die Gegenstände. Kleinere Gegenstände mit einer maximalen Länge L_{G1} sind bei dem Wägevorgang durch das erste Wägeplattensegment mit einer Länge L_{W1} erfass- bzw. ermittelbar und mittels der entsprechenden Wägezelle wägbar. Der Wiegebereich von Gegenständen mit einer Länge > L_{G1} aber ≤ L_{G2} ist durch das erste und das zweite Wägeplattensegment vorgesehen, so dass die Gewichtsermittlung mittels des mindestens einen Wägezelle umfassenden Verbindungselements erfolgt, das das erste Wägeplattensegment mit dem zweiten Wägeplattensegment verbindet. Mittels der Erfassungseinheit ist die Länge der zu wiegenden Gegenstände vor dem Wägevorgang erfass- und/oder ermittelbar, so dass in Abhängigkeit der Länge der Gegenstände jeweils die entsprechende Wägezelle zur Gewichtsermittlung heranziehbar ist, die für den Wägebereich der Gegenstände vorgesehen ist. Kleinere Gegenstände mit einer maximalen Länge L_{G1} werden durch die in Transportrichtung T erste Wägezelle erfasst bzw. ermittelt, während Gegenstände mit einer Länge > L_{G1} aber ≤ L_{G2} mittels der in Transportrichtung T zweiten Wägezelle erfass- bzw. ermittelbar sind, was die Gewichtskraft des Verbindungselements erfasst/ermittelt und somit den Gegenstand auf dem ersten und dem zweiten Wägeplattensegment wiegt. Die erfindungsgemäße Ausgestaltung der Wägeeinrichtung in Verbindung mit der Transporteinrichtung ermöglicht erst eine Messung in der Bewegung, was den wesentlichen Vorteil im Vergleich zu den vorbekannten Wägevorrichtungen darstellt. Durch die neuartige Konstruktion können schnellere Transportgeschwindigkeiten bei konstanten und validen Gewichtsermittlungen realisiert werden. Darüber hinaus ermöglicht die Auswahl der entsprechenden Wägezelle eine flexible Erfassung des Gewichts der Gegenstände in Abhängigkeit der entsprechenden Länge. Durch mehrere hintereinander geschaltete Wägeplattensegmente können die zum Wiegen benötigten Mindestabstände zwischen den Gegenständen deutlich reduziert werden. Kleinere Gegenstände mit einer maximalen Länge L_{G1} müssen nicht auf der gesamten Wägeplatte angeordnet sein, sondern es ist ausreichend, wenn sich diese nur auf dem ersten Wägeplattensegment zur Gewichtsermittlung befinden. Da derartige Vorrichtungen vorzugsweise zum Wiegen von im Strom bereitgestellten Gegenständen vorgesehen sind, kann eine Gewichtsermittlung von nachfolgenden Gegenständen zu einem früheren Zeitpunkt erfolgen, da der Wägevorgang des Gegenstandes mit der maximalen Länge L_{G1} durch die Gewichtsermittlung der ersten Wägezelle bereits abgeschlossen ist und nachfolgende Gegenstände den Wägevorgang durch Bereitstellung in der Erfassungseinheit aufnehmen können. Auf diese Weise ist der Abstand zwischen den Gegenständen reduzierbar und der anschließend zu wiegende Gegenstand kann wiederum in Abhängigkeit seiner Länge (L_{G1}, L_{G2} bzw. L_{Gn}) durch die Wägezelle des ersten Wägeplattensegments oder der Wägezelle des Verbindungselements gewogen werden. Vorzugsweise entspricht die Länge des jeweiligen Verbindungselements im Wesentlichen der Hälfte der zusammengefassten Länge aller Wägeplattensegmente, die das Verbindungselement verbindet.

Unter "Gegenstände" im Sinne der Erfindung sind sämtliche Gegenstände oder Produkte zu verstehen, die zur Gewichtsermittlung geeignet bzw. vorgesehen sind. Derartige Gegenstände sind auch unter den Begriffen Produkte, Erzeugnis, Ware etc. bekannt. Vorzugsweise sind die Gegenstände Lebensmittel, die unterschiedliche Schwankungen in der Länge und/ oder des Gewichts aufweisen. Besonders bevorzugt handelt es sich bei den zu wiegenden Gegenständen um tierische Roh- oder Zwischenprodukte, insbesondere um Fische oder Fischfilets.

Die Vorrichtung ist dafür vorgesehen, Gegenstände mit unterschiedlichen Längen und/ oder Breiten zu wiegen. Länge bedeutet in diesem Zusammenhang die Ausdehnung der Gegenstände in Längsausrichtung bezogen auf die Transportrichtung T, wobei Gegenstände in gleichem Maße durch die Vorrichtung wägbar sind, die unterschiedliche Breiten aufweisen, jedoch mit der Breite im Wesentlichen quer zur Transportrichtung T gefördert werden. Die Breite der Gegenstände ist für die Erfindung von untergeordneter Relevanz, sofern die Breite der Gegenstände die Breite der Wägeplatte bzw. der Wägeplattensegmente nicht überschreitet.

Für ein zuverlässiges Wiegen der Gegenstände ist es vorteilhaft, wenn ein gewisser Mindestabstand zwischen den Gegenständen nicht unterschritten wird. Der Mindestabstand ist insbesondere derart gewählt, dass die Wägezelle eine konstante Gewichtsermittlung des entsprechenden Gegenstandes in Abhängigkeit seiner Länge ausführt. Es ist jeweils die Wägezelle der Wägeeinrichtung zur Gewichtsermittlung vorgesehen, deren Wägeplattensegmentlänge bzw. deren kombinierte Wägeplattensegmentlänge im Wesentlichen kleiner und/oder gleich der Länge des Gegenstandes ist. Dies bedeutet in anderen Worten, dass jeweils das Wägeplattensegment oder die Wägeplattensegmente der Wägeplatte vorgesehen ist/sind, das oder die größer oder gleich der Länge des Gegenstandes entspricht/entsprechen, zuzüglich einer erforderlichen Wägelänge, die zur Gewichtsermittlung mittels der Wägezelle benötigt wird.

Eine bevorzugte Ausführungsform ist dadurch gekennzeichnet, dass jedes weitere in Verlauf der Transportrichtung T nachgeordnete Wägeplattensegment jeweils mittels eines weiteren mindestens eine Wägezelle umfassenden Verbindungselements zumindest mit dem vorherigen Verbindungselement verbunden ist, und zum Erzeugen eines Wägesignals eines Gegenstandes mit einer maximalen Länge L_{G1} und/oder L_{G2} und/oder L_{Gn} ausgebildet und eingerichtet ist. Die Ausbildung mehrerer Verbindungselemente, die jeweils mit dem in Transportrichtung letzten Wägeplattensegment zur Gewichtsermittlung von Gegenständen mit einer korrespondierenden Länge ausgebildet und eingerichtet sind, ermöglicht eine weitere Flexibilität bei Wägevorgängen der Wägevorrichtung von Gegenständen unterschiedlicher Länge. Eine Untergliederung der Wägeplatte in Wägeplattensegmente unterschiedlicher Länge L_{W1}, L_{W1} + L_{W2} bzw. L_{W1} + L_{W2} + L_{Wn} erhöht einerseits die Möglichkeit, Gewicht von Gegenständen mit einer großen Bandbreite von Längen L_{G1}, L_{G2} bzw. L_{Gn} zu ermitteln, und andererseits kann durch die Segmentierung in unterschiedliche Teilbereiche eine individuelle und konkrete Gewichtsermittlung durch die jeweiligen Wägeplattensegmente mit der korrespondierenden Länge der Gegenstände erfolgen. Auf diese Weise wird zudem eine Möglichkeit zur Abstandsreduzierung zwischen den zu wiegenden Gegenständen bereitgestellt, um Durchsatzreduzierungen zu vermeiden. Somit kann der Abstand zwischen den zu wiegenden Gegenständen möglichst klein gewählt werden, was den Durchsatz bei dem Wägevorgang sowie bei den nachgeordneten Verarbeitungsschritten erhöht.

Eine vorteilhafte Weiterbildung zeichnet sich dadurch aus, dass das erste und/oder das zweite in Verlauf der Transportrichtung T angeordnete Wägeplattensegment mit dem ersten in Verlauf der Transportrichtung T angeordneten Verbindungselement mechanisch gelagert verbunden ist und zur Übertragung einer Gewichtskraft ausgebildet und eingerichtet ist. Auf diese Weise ist eine sichere, einfache und kosteneffiziente Möglichkeit der Gewichtskraftübertragung zwischen dem entsprechenden Verbindungselement und dem zugehörigen Wägeplattensegment gegeben, um eine zuverlässige Übertragung der Gewichtskraft bereitzustellen. Alternativ oder ergänzend sind weiter bevorzugt sensorgestützte oder errechnete Verbindungen unter der Begrifflichkeit Verbindungselement zu verstehen. In einer weiteren bevorzugten Ausführungsform erfolgt die Erzeugung und/oder Übertragung der Gewichtskraft mittels digitalen Mess- und/oder Rechenmethoden.

In einer weiteren vorteilhaften Ausgestaltung der Erfindung ist das in Transportrichtung T erste Verbindungselement mit der Wägezelle des ersten Wägeplattensegments verbunden. Somit kann die Gewichtskraft entweder direkt aus den erzeugten Daten der Wägezelle abgeleitet werden und/oder alternativ ist eine mechanische Übertragung im Bereich der Wägezelle vorgesehen. Die Wägezelle ist vorzugsweise mittig unter dem ersten Wägeplattensegment angeordnet, um die besten Messergebnisse zu erzielen, wodurch ebenfalls für die Übertragung der Gewichtskraft mittels des Verbindungselements eine präferierte Anordnung gegeben ist.

Eine zweckmäßige Ausgestaltung der Erfindung ist dadurch gekennzeichnet, dass die Länge L_{G1} der Gegenstände kleiner und/oder gleich der Länge L_{W1} des ersten Wägeplattensegments ist, und dass die Länge L_{G2} der Gegenstände kleiner und/oder gleich der Länge L_{W1} + L_{W2} des ersten Wägeplattensegments und des zweiten Wägeplattensegments ist, und dass die Länge L_{Gn} der Gegenstände kleiner und/oder gleich der Länge L_{W1} + L_{W2} + L_{Wn} des ersten Wägeplattensegments, des zweiten Wägeplattensegments und des oder jeden weiteren Wägeplattensegments ist. "L_{Gn}" bzw. "L_{Wn}" stehen dabei jeweils für weitere erfindungsgemäße Längen von mittels der Vorrichtungen zu wägenden Gegenständen bzw. von Längen von möglichen weiteren Wägeplattensegmenten. Der weitere Gegenstand oder die weiteren Gegenstände mit der Länge L_{Gn} weist oder weisen dabei eine größere Länge auf als L_{G1} oder L_{G2}. Das weitere Wägeplattensegment oder die weiteren Wägeplattensegmente mit der Länge L_{Wn} weist oder weisen dabei vorzugsweise eine unspezifische Länge auf, bzw. die Länge der weiteren Wägeplattensegmente L_{Wn} ist nicht wesentlich für die Erfindung. In Summe weisen die Wägeplattensegmente L_{W1} + L_{W2} + L_{Wn} jedoch eine größere Länge auf als L_{W1} bzw. L_{W1} + L_{W2}. Durch die korrespondierende Länge der Gegenstände mit den Wägeplattensegmenten ist eine spezifische Gewichtsermittlung der entsprechenden Gegenstände auf eine einfache und zuverlässige Art und Weise gegeben. Die Erfassungseinheit erfasst die Länge der Gegenstände, wodurch die Wägezelle des entsprechenden Wägeplattensegments bzw. der Wägezelle des entsprechenden Verbindungselements ausgewählt ist. Die Länge des zu wiegenden Gegenstandes ist vorzugsweise kleiner als die Länge des korrespondierenden Wägeplattensegments bzw. kleiner als die Länge der korrespondierenden Wägeplattensegmente, da gewisse Verzögerungen beim Wiegevorgang bei einer Transportgeschwindigkeit auftreten können. Für den Messvorgang ist es erforderlich, dass der Gegenstand vollständig auf der Wägeplatte aufliegt, was zuverlässig gewährleistet werden kann, wenn die Länge der Wägeplatte bzw. die Länge des/der Wägeplattensegments/e vollständig der Länge des Gegenstands entspricht/entsprechen bzw. wenn die Länge der Wägeplatte bzw. die Länge des/der Wägeplattensegments/e größer ist als die Länge des Gegenstands, insbesondere bei hohen Transportgeschwindigkeiten, wobei ggf. eine zusätzliche Wägestrecke zu berücksichtigen ist, die sich aus der erforderlichen Wägezeit in Verbindung mit der Transportgeschwindigkeit (Bandgeschwindigkeit) ergibt. Die Länge der Wägeplatte bzw. des/der Wägeplattensegments/e muss ausreichend groß gewählt sein, damit präzise und valide Gewichte ermittelt werden können, indem die Verweilzeit der vollständig auf der Wägeplatte befindlichen Gegenstände ausreichend groß gewählt ist. Anders ausgedrückt ist vorzugsweise jeweils eine zusätzliche Wägelänge zwischen Gegenstand und Wägeplatte erforderlich, die im Verhältnis zu der Transportgeschwindigkeit sowie der Messdauer steht und ausreichend groß gewählt ist, um eine Erfassung des Gewichts mittels der entsprechenden Wägezelle auszubilden und einzurichten. Diese erforderliche Wägelänge stellt die minimale Differenz zwischen der Länge der Gegenstände und der Länge der Wägeplatte dar, wodurch beispielsweise L_{G1} < L_{W1} ist.

In einer bevorzugten Ausführungsform kann die Transportgeschwindigkeit zumindest während des Wiegevorgangs reduzierbar ausgebildet und eingerichtet sein. Vorzugsweise ist die Transportgeschwindigkeit während des Wiegevorgangs der Gegenstände im Wesentlichen 0. Auf diese Weise ist der Abstand zwischen den Gegenständen verringerbar und die Länge der Gegenstände kann im Wesentlichen der Länge der Wägeplattensegmente bzw. der Summe der Wägeplattensegmente entsprechen.

Gemäß einer weiteren bevorzugten Ausführungsform der Erfindung umfasst die Wägeplatte drei bis sieben Wägeplattensegmente, wobei ab dem in Verlauf der Transportrichtung T zweiten Wägeplattensegment jeweils ein Verbindungselement zur Verbindung mindestens eines Wägeplattensegments mit dem Verbindungselement vorgesehen ist. Dies erhöht weiter den Einsatzbereich sowie die Genauigkeit und Effizienz der Vorrichtung, da einerseits eine kleinteiligere Untergliederung der Wägeplatte durch eine Erhöhung der Anzahl der Wägeplattensegmente erfolgen kann und andererseits können größere Längen von Gegenständen gewogen werden. Die Länge der entsprechenden Wägeplattensegmente ist im Grunde unwesentlich und kann entweder genutzt werden, eine große Gesamtlänge zu erzeugen oder um eine spezifische Untergliederung in einem Bereich bzw. in Bereiche vorzunehmen. Die Vorrichtung kann auf diese Weise im Bedarfsfall eine große Bandbreite an verschiedenen Längen wiegen sowie den Abstand der Gegenstände zueinander verringern, da die Länge der Wägeplattensegmenten in Bezug auf die Varianz der Gegenstände ausgewählt sind.

Eine weitere zweckmäßige Ausgestaltung der Erfindung ist dadurch gekennzeichnet, dass die Erfassungseinheit als ein Scansystem ausgebildet und eingerichtet ist, wobei das Scansystem vorzugsweise mindestens eine Kamera und/oder mindestens eine Lasermesseinrichtung umfasst. Durch das Scansystem wird eine einfache Möglichkeit bereitgestellt, um die Länge der Gegenstände zu ermitteln bzw. zu erfassen. Vorzugsweise umfasst das Scansystem digitale Messmethoden, wobei alternativ oder ergänzend auch analoge Erfassungseinheiten vorgesehen sein können, um die Länge der Gegenstände zu erfassen. Die Erfassungseinheit ist vorzugsweise ausgebildet und eingerichtet, die konkrete Länge der Gegenstände zu erfassen. Unter dem Begriff Scansystem ist weiterhin auch eine Strahlungseinrichtung zu verstehen, beispielsweise ein System umfassend eine Röntgeneinheit, die zur Erzeugung eines Röntgenbildes der Gegenstände ausgebildet und eingerichtet ist. Weiter bevorzugt ist die Erfassungseinheit als bildgebende Erfassungseinheit ausgebildet und eingerichtet, beispielsweise als ein Röntgensystem zur Ermittlung der Gegenstandslänge.

Eine bevorzugte Weiterbildung der Erfindung zeichnet sich dadurch aus, dass mindestens eines der Verbindungselemente plattenförmig ausgebildet und eingerichtet ist. Plattenförmige Verbindungselemente bieten eine Vielzahl an Möglichkeiten, die Gewichtskraft weiterzuleiten und eignen sich bevorzugt zur Berechnung der auftretenden Kräfte. Die plattenförmigen Verbindungselemente sind vorzugsweise längliche oder flächige Elemente mit festgelegten Übertragungspunkten für die weiterzuleitenden Gewichtskräfte bzw. für die vorgesehenen Wägezellen.

Eine zweckmäßige Ausgestaltung der Erfindung ist dadurch gekennzeichnet, dass die Verbindung zwischen mindestens einem der Verbindungselemente und mindestens einem der Wägeplattensegmente mittels mindestens zwei im Wesentlichen parallel zueinander verlaufender Lastelemente ausgebildet und eingerichtet ist. Die Lastelemente dienen zur Übertragung der entsprechenden Gewichtskraft von dem entsprechenden Wägeplattensegment zu dem Verbindungselement. Durch die parallel zueinander verlaufenden Lastelemente ist im Wesentlichen eine gleichmäßige und/oder berechenbare Gewichtskraftübertragung gegeben, um eine zuverlässige Ermittlung des auf der Wägeplatte transportierten Gegenstandes bereitzustellen.

Eine vorteilhafte Weiterbildung zeichnet sich dadurch aus, dass die im Wesentlichen parallel zueinander verlaufenden Lastelemente im Wesentlichen orthogonal zu dem Transportelement ausgebildet und eingerichtet sind. Dies gewährleistet eine direkte Kraftübertragung der Lastelemente und ermöglicht es auf einfache Art und Weise, eine Berechnung der entsprechenden Kräfte vorzunehmen.

In einer weiteren bevorzugten Weiterbildung der Erfindung sind die erfindungsgemäßen Gegenstände Fischfilets mit einer Länge von 200 mm bis 900 mm. Auf diese Weise wird eine Möglichkeit bereitgestellt, geläufige Größen bei Fischfilets zu wägen. Die Erfindung ist aber in gleichem Maße dazu geeignet, weitere Gegenstände in davon abweichenden Längen zu wägen. Die Längen der Wägeplattensegmente können variabel ausgewählt sein, um eine gewünschte Gesamtlänge bereitzustellen. Die Wägeplattensegmente können beispielsweise die Längen 600 mm, 200 mm und 200 mm aufweisen, wodurch die Vorrichtung zum Wägen Gegenständen mit einer Länge im Bereich von 200 bis 900 mm ausgelegt sein könnte. Ein weiterer Parameter stellt hierbei in der Regel die Transportgeschwindigkeit bzw. Bandgeschwindigkeit dar, die in dem vorliegenden Beispiel bei maximal 600 mm/s liegen könnte. In dem vorliegenden Beispiel wird bei einem Längenbereich von 200 mm bis einschließlich 500 mm nur das erste Wägeplattensegment und damit die erste Wägezelle betrachtet. Im Längenbereich ab 500 mm bis einschließlich 700 mm werden die beiden ersten Wägeplattensegmente und damit die Wägezelle des ersten Verbindungselements betrachtet. Im Längenbereich ab 700 mm bis einschließlich 900 mm werden alle drei Wägeplattensegmente und nur die dritte Wägezelle, d. h., die Wägezelle des zweiten Verbindungselements betrachtet.

In einer weiteren vorteilhaften Ausgestaltung der Erfindung ist in Abhängigkeit der durch die Erfassungseinheit erfassten Länge L_{G1}, L_{G2}, L_{Gn} des Gegenstandes das entsprechende Wägesignal der korrespondierenden Länge L_{W1}, L_{W1} + L_{W2} bzw. L_{W1} + L_{W2} + L_{Wn} der Wägeplattensegmente zur Gewichtsermittlung verwendbar. Vorzugsweise ist jeweils nur das Wägesignal der entsprechenden Wägezelle vorgesehen, dessen Länge im Wesentlichen der Länge des zu wägenden Gegenstandes entspricht bzw. größer ist. Potentielle Messwerte von weiteren Wägezellen sind für die Gewichtsermittlung bevorzugterweise nicht hinzuziehbar. Weiter bevorzugt beruht die Gewichtsermittlung der Gegenstände jeweils nur auf einer einzigen Wägezelle, deren Gewicht aktiv über das entsprechende Wägeplattensegment bzw. über das entsprechende Verbindungselement in Kombination mit dem oder den jeweiligen Wägeplattensegmenten erzeugbar ist.

Eine weitere zweckmäßige Ausgestaltung der Erfindung ist dadurch gekennzeichnet, dass die Transportgeschwindigkeit in Abhängigkeit der Länge L_{G1}, L_{G2}, L_{Gn} der Gegenstände und/oder der Länge L_{W1}, L_{W2}, L_{Wn} der Wägeplattensegmente steuer- und/oder regelbar ausgebildet und eingerichtet ist. Die Transportgeschwindigkeit der zu transportierenden Gegenstände hat regelmäßig einen erheblichen Einfluss auf die auszubildenden (Mindest-)Abstände zwischen den Gegenständen. Grundsätzlich besteht das Erfordernis, bei hohen Transportgeschwindigkeiten einen größeren Abstand zwischen den Gegenständen auszubilden und einzurichten, als bei langsameren Transportgeschwindigkeiten. In Abhängigkeit der verwendeten Wägezellen ist es erforderlich, dass der Gegenstand für eine bestimmte Zeitspanne auf der Wägeplatte bzw. in dem Wägebereich der Wägeplatte verbleibt. Durch die Steuer- und/oder Regelbarkeit ist es möglich, dass die Transportgeschwindigkeit in Abhängigkeit der jeweiligen Länge der Gegenstände optimal anpassbar ist, um gewünschte Abstände zwischen den Gegenständen einzuhalten, damit aussagekräftige und valide Wägeergebnisse erzielbar sind.

Eine vorteilhafte Weiterbildung der Erfindung zeichnet sich dadurch aus, dass die Gegenstände mit einem Abstand zueinander auf das Transportelement anordenbar sind, wobei der Abstand zueinander abhängig von der Länge L_{G1}, L_{G2}, L_{Gn} der Gegenstände und/oder der Länge L_{W1}, L_{W1} + L_{W2} bzw. L_{W1} + L_{W2} + Lwn der Wägeplattensegmente und/oder der Transportgeschwindigkeit einstellbar ausgebildet und eingerichtet ist. Es ist beispielsweise ein Minimalabstand zwischen den Gegenständen vorgesehen, um ausreichend Abstand bei den Wägevorgängen zu erhalten, damit keine Fehlmessungen ausgeführt werden. Je nach Transportgeschwindigkeit kann der Minimalabstand unterschiedlich sein. Bei höheren Geschwindigkeiten ist in der Regel ein größerer Abstand erforderlich.

Eine weitere zweckmäßige Ausgestaltung der Erfindung ist dadurch gekennzeichnet, dass der Abstand zwischen den Gegenständen unabhängig von der Länge der Gegenstände L_{G1}, L_{G2}, L_{Gn} und/oder der Länge L_{W1}, L_{W2}, L_{Wn} der Wägeplattensegmente und/ oder von der Transportgeschwindigkeit im Wesentlich konstant einstellbar ausgebildet und eingerichtet ist. Damit ist ein verbesserter Einsatzzweck für potentielle nachgelagerte Bearbeitungsschritte oder Maschinen gegeben, wodurch insbesondere die Effizienz derartiger Vorrichtungen und Anlagen erhöht wird. Derartige Wägevorrichtungen sind regelmäßig in Anlagen mit vielen Schritten integriert oder integrierbar, die jeweils aufeinander aufbauende Prozesse beinhalten. Für die weitere Verarbeitung ist es vorteilhaft, wenn ein konstanter Output an Gegenständen erzeugbar ist, um einen reibungslosen, zeitverlustfreien und konstanten weiteren Ablauf zu gewährleisten.

In einer bevorzugten Ausführungsform umfasst die Vorrichtung weiter mindestens eine Steuer- und/oder Rechnereinheit, ausgebildet und eingerichtet, eine Ermittlung des Gewichts durch die Wägeeinrichtung in Abhängigkeit der durch die Erfassungseinheit erfassten Länge L_{G1}, L_{G2}, L_{Gn} der Gegenstände bereitzustellen, wobei jeweils das/die entsprechende/entsprechenden Wägeplattensegment/Wägeplattensegmente mit der Länge L_{W1}, L_{W1} + L_{W2} bzw. L_{W1} + L_{W2} + L_{Wn} zur Erzeugung eines Wägesignals auswählbar ist, vorzugsweise automatisch oder automatisierbar, dessen Länge bzw. die Summe der Länge der Länge L_{G1}, L_{G2}, L_{Gn} der Gegenstände entspricht.

Weiter bevorzugt ist die Wägezelle zumindest im Wesentlichen mittig zum Wiegebereich des entsprechenden Gegenstandes ausgebildet und eingerichtet. Vorzugsweise ist die Wägezelle mittig zur Wägeplatte ausgebildet und eingerichtet. Die oder jede Wägezelle ist weiter bevorzugt derart ausgebildet und eingerichtet, dass diese jeweils mittig zu dem oder den entsprechenden Wägeplattensegment bzw. Wägeplattensegmenten ausgebildet und eingerichtet ist, um die Kraft des auf der Wägeplatte befindlichen Gegenstandes zumindest im Wesentlichen in der Mitte aufzunehmen.

Die Aufgabe wird auch durch das eingangs genannte Verfahren dadurch gelöst, dass das Wägesignal eines Gegenstandes einer maximalen Länge L_{G1} mittels einer in Verlauf der Transportrichtung T ersten Wägeplattensegments umfassenden Wägezelle erzeugt wird, und dass ein Wägesignal eines Gegenstandes einer maximalen Länge L_{G1} und/oder L_{G2} mittels des in Verlauf der Transportrichtung T dem ersten Wägeplattensegment nachgeordneten mindestens eine Wägezelle umfassenden Wägeplattensegment erzeugt wird, wobei das erste Wägeplattensegment mit dem nachgeordneten Wägeplattensegment mittels eines Verbindungselements verbunden ist.

Zur Vermeidung von Wiederholungen wird im Zusammenhang mit dem erfindungsgemäßen Verfahren auf die bereits im Zusammenhang mit der erfindungsgemäßen Vorrichtung im Detail geschilderten Vorzüge verwiesen. Diese gelten in analoger Weise auch für das im Folgenden angegebene erfindungsgemäße Verfahren.

Eine Weiterbildung ist dadurch gekennzeichnet, dass ein Wägesignal eines Gegenstandes einer maximalen Länge L_{G1} und/oder L_{G2} und/oder L_{Gn} mittels jedes weiteren in Verlauf der Transportrichtung T mindestens eine Wägezelle umfassenden nachgeordneten Wägeplattensegments erzeugt wird, wobei jedes weitere Wägeplattensegment jeweils ein Verbindungselement umfasst und mit dem vorherigen Verbindungselement verbunden ist.

In einer weiteren vorteilhaften Ausgestaltung der Erfindung ist das erste und/oder das zweite in Verlauf der Transportrichtung T angeordnete Wägeplattensegment mit dem ersten in Verlauf der Transportrichtung T angeordneten Verbindungselement mechanisch gelagert verbunden, wobei eine Gewichtskraft übertragen wird.

Eine zweckmäßige Ausgestaltung der Erfindung ist dadurch gekennzeichnet, dass das in Transportrichtung T erste Verbindungselement mit der Wägezelle des ersten Wägeplattensegments verbunden ist.

Eine weitere bevorzugten Ausführungsform der Erfindung zeichnet sich dadurch aus, dass die Länge L_{G1} der Gegenstände kleiner und/oder gleich der Länge L_{W1} des ersten Wägeplattensegments ist, und dass die Länge L_{G2} der Gegenstände kleiner und/oder gleich der Länge L_{W1} + L_{W2} des ersten Wägeplattensegments und des zweiten Wägeplattensegments ist, und dass die Länge L_{Gn} der Gegenstände kleiner und/oder gleich der Länge L_{W1} + L_{W2} + L_{Wn} des ersten Wägeplattensegments, des zweiten Wägeplattensegments und des oder jeden weiteren Wägeplattensegments ist.

Eine weitere zweckmäßige Ausgestaltung der Erfindung ist dadurch gekennzeichnet, dass mindestens eines der Verbindungselemente und mindestens eines der Wägeplattensegmente mittels mindestens zwei im Wesentlichen parallel verlaufender Lastelemente verbunden sind.

Eine bevorzugte Weiterbildung der Erfindung zeichnet sich dadurch aus, dass die Gegenstände Fischfilets mit einer Länge von 200 mm bis 900 mm sind.

Eine weitere zweckmäßige Ausgestaltung der Erfindung ist dadurch gekennzeichnet, dass in Abhängigkeit der durch die Erfassungseinheit erfassten Länge L_{G1}, L_{G2}, L_{Gn} des Gegenstandes das entsprechende Wägesignal der korrespondierenden Länge L_{W1}, L_{W1} + L_{W2} bzw. L_{W1} + L_{W2} + L_{Wn} der Wägeplattensegmente zur Gewichtsermittlung verwendet wird.

Eine bevorzugte Weiterbildung der Erfindung zeichnet sich dadurch aus, dass die Transportgeschwindigkeit in Abhängigkeit der Länge L_{G1}, L_{G2}, L_{Gn} der Gegenstände und/oder der Länge L_{W1}, L_{W2}, L_{Wn} der Wägeplattensegmente gesteuert und/oder geregelt wird.

Gemäß einer weiteren bevorzugten Ausführungsform der Erfindung werden die Gegenstände mit einem Abstand zueinander auf das Transportelement angeordnet, wobei der Abstand zueinander abhängig von der Länge L_{G1}, L_{G2}, L_{Gn} der Gegenstände und/ oder der Länge L_{W1}, L_{W2}, L_{Wn} der Wägeplattensegmente und/oder der Transportgeschwindigkeit eingestellt wird.

In einer bevorzugten Ausführungsform wird der Abstand zwischen den Gegenständen unabhängig von der Länge der Gegenstände L_{G1}, L_{G2}, L_{Gn} und/oder der Länge L_{W1}, L_{W2}, L_{Wn} der Wägeplattensegmente und/oder von der Transportgeschwindigkeit im Wesentlich konstant eingestellt.

Die sich daraus ergebenden Vorteile und Effekte wurden bereits im Zusammenhang mit der Vorrichtung beschrieben, weshalb zur Vermeidung von Wiederholungen auf die vorstehenden Passagen verwiesen wird.

Weitere zweckmäßige und/oder vorteilhafte Merkmale und Weiterbildungen zur erfindungsgemäßen Vorrichtung sowie zum Verfahren ergeben sich aus den Unteransprüchen und der Beschreibung. Besonders bevorzugte Ausführungsformen der Vorrichtung sowie des Verfahrens werden anhand der beigefügten Zeichnungen näher erläutert. In den Zeichnungen zeigen:
Fig. 1 eine schematische Darstellung einer erfindungsgemäßen Vorrichtung in der Seitenansicht,
Fig. 2 eine weitere Seitenansicht der in Fig. 1 gezeigten Vorrichtung mit einem Gegenstand mit der Länge L_{G1},
Fig. 3 eine weitere Seitenansicht der in Fig. 1 gezeigten Vorrichtung mit einem Gegenstand mit der Länge L_{G2}
   und
Fig. 4 eine weitere Seitenansicht der in Fig. 1 gezeigten Vorrichtung mit einem Gegenstand mit der Länge L_{Gn} bzw. L_{G3}.

Anhand der vorgenannten Figuren wird die erfindungsgemäße Vorrichtung zum Wiegen von Gegenständen näher beschrieben.

Die in den Zeichnungen gezeigten Gegenstände sind exemplarisch als schematische Fischfilets dargestellt. Die Erfindung bezieht sich in gleicher Weise auf vergleichbare Gegenstände, die nicht im Bereich der Lebensmittel oder der Lebensmittel verarbeitenden Industrie angesiedelt sind.

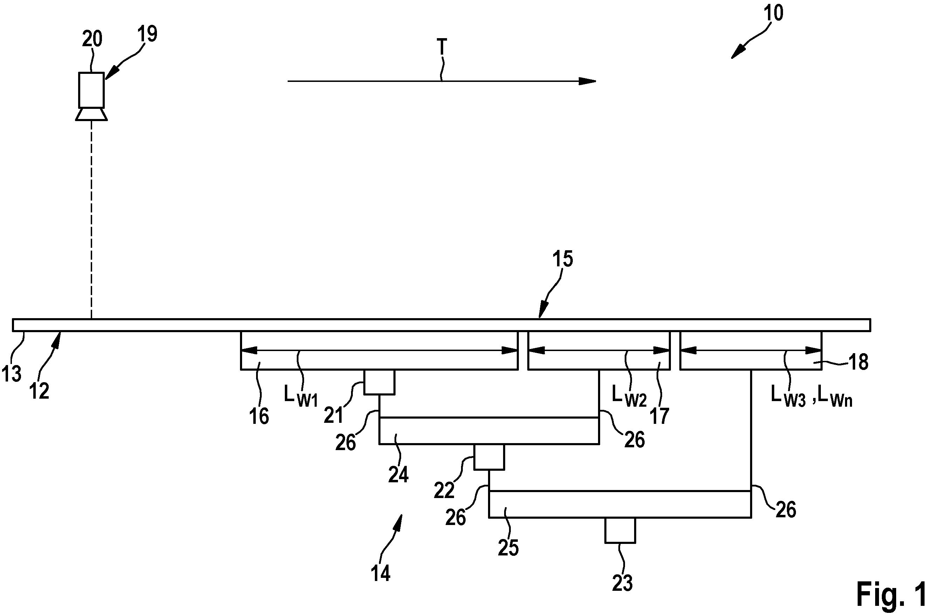

Fig. 1 bis Fig. 4 zeigen jeweils schematisch eine Ausführungsform einer Vorrichtung 10 zum Wiegen von Gegenständen 11 unterschiedlicher Länge L_{G1}, L_{G2}, L_{Gn}, insbesondere von Lebensmitteln, umfassend eine Transporteinrichtung 12 mit mindestens einem Transportelement 13, ausgebildet und eingerichtet zum Transportieren der Gegenstände 11 mit einer Transportgeschwindigkeit in eine Transportrichtung T, eine unterhalb des mindestens einen Transportelements 13 angeordnete Wägeeinrichtung 14, ausgebildet und eingerichtet zur Ermittlung des Gewichts des mittels der Transporteinrichtung 12 transportierten Gegenstandes 11, wobei die Wägeeinrichtung 14 eine Wägeplatte 15, umfassend mindestens zwei separate, unterhalb des mindestens einen Transportelements 13 in Transportrichtung T hintereinander angeordnete Wägeplattensegmente 16, 17, 18, umfasst, wobei die mindestens zwei Wägeplattensegmente 16, 17, 18 jeweils eine Länge L_{W1}, L_{W2}, L_{Wn} aufweisen, eine der Wägeeinrichtung 14 in Transportrichtung T vorgelagerte Erfassungseinrichtung 19 mit mindestens einer Erfassungseinheit 20, ausgebildet und eingerichtet zumindest zum Erfassen der Länge L_{G1}, L_{G2}, L_{Gn} der Gegenstände 11.

Diese Vorrichtung 10 zeichnet sich erfindungsgemäß dadurch aus, dass das in Verlauf der Transportrichtung T erste Wägeplattensegment 16 mindestens eine Wägezelle 21 umfasst und zum Erzeugen eines Wägesignals eines Gegenstandes 11 mit einer maximalen Länge L_{G1} ausgebildet und eingerichtet ist, und dass das weitere in Verlauf der Transportrichtung T dem ersten Wägeplattensegment 16 nachgeordnete Wägeplattensegment 17 mittels eines mindestens eine Wägezelle 22 umfassenden Verbindungselements 24 mit dem ersten Wägeplattensegment 16 verbunden ist, und zum Erzeugen eines Wägesignals eines Gegenstandes 11 mit einer maximalen Länge L_{G1} und/ oder L_{G2} ausgebildet und eingerichtet ist.

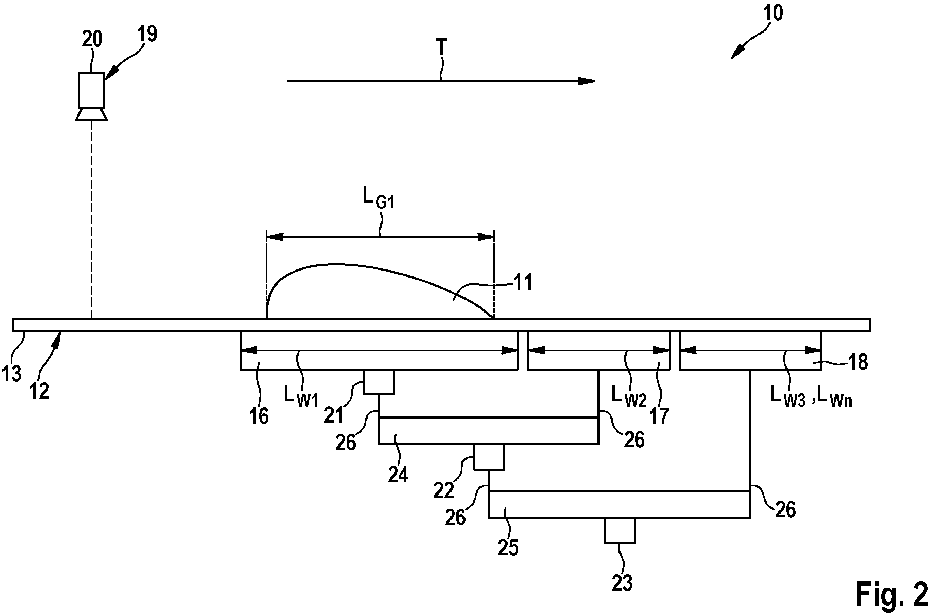

In der Fig. 1 ist eine erfindungsgemäße Vorrichtung 10 zum Wiegen von Gegenständen 11 in der Seitenansicht dargestellt. Derartige Vorrichtungen 10 sind regelmäßig in - nicht gezeigten - industriellen Anlagen oder Maschinen integriert, um die erfindungsgemäßen Vorgänge im Zusammenhang mit der Vorrichtung 10 auszuführen. Selbstverständlich ist jedoch auch eine eigenständige Nutzung derartiger Vorrichtungen 10 möglich. Die erfindungsgemäßen Vorrichtungen 10 sind in der Regel auf einem - in den Figuren - nicht gezeigten planaren Untergrund angeordnet, um die Wägeplatte 15 bzw. das Transportelement 13 im Wesentlichen parallel zu dem Untergrund auszubilden. Die Fig. 1 zeigt eine erfindungsgemäße Ausführungsform der Vorrichtung 10 ohne zu wiegende Gegenstände, wohingegen die Fig. 2, Fig. 3 und Fig. 4 die Vorrichtung 10 der Fig. 1 jeweils mit Gegenständen 11 unterschiedlicher Länge zeigen. In den Fig. 1 bis Fig. 4 weist die Wägeplatte 15 exemplarisch drei Wägeplattensegmente 16, 17, 18 auf, wobei die entsprechenden drei Wägeplattensegmente 16, 17, 18 jeweils eine definierte Länge L_{W1}, L_{W2}, L_{Wn} bzw. L_{W3} aufweisen. Derartige Vorrichtungen 10 sind nicht auf Wägeplatten 15 mit zwei oder drei Wägeplattensegmenten 16, 17, 18 beschränkt, die jeweils eine definierte Länge L_{W1}, L_{W2}, Lwn bzw. L_{W3} aufweisen. Durch die Bezeichnung der Länge L_{Wn} ist umfasst, dass weitere Wägeplattensegmente 16, 17, 18 umfasst sein können, die jeweils eine eigenständige definierte Länge L_{Wn} aufweisen. Konkrete Größen- oder Längenangaben sind für die Erfindung nicht wesentlich. Ferner sind die zu wiegenden Gegenstände 11 ebenfalls nicht von übergeordneter Relevanz für die Erfindung. Sofern spezielle Gegenstände 11, beispielsweise aus dem Bereich der Lebensmittel oder tierverarbeitenden Industrie, mittels der Vorrichtung 10 gewogen werden sollen, sind ggf. spezielle Anpassungen an die Vorrichtung 10 notwendig. Derartige Anpassungen können beispielsweise eine Wasserbeständigkeit der Komponenten oder spezielle Materialien wie lebensmittelechte Kunststoffe oder Edelstahlkomponenten sein.

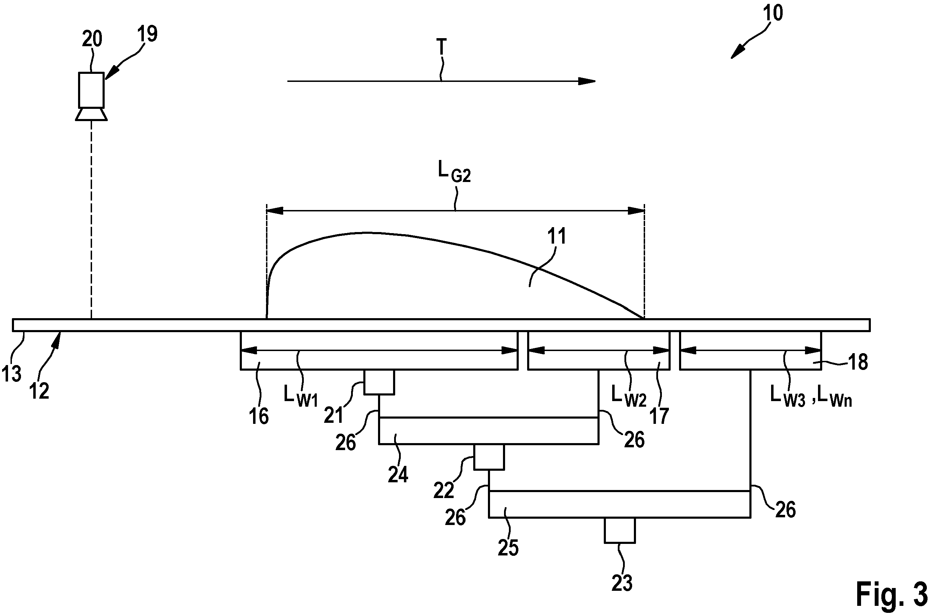

Zum Wiegen werden die Gegenstände 11 mittels des Transportelements 13 über die Wägeplatte 15 transportiert, wobei der Gegenstand 11 in Abhängigkeit seiner Länge auf mindestens einer der Wägeplattensegmente 16, 17, 18 in Längsausrichtung vollständig aufliegt, wodurch die entsprechend zugehörige Wägezelle 21 ein Wägesignal des Gegenstandes 11 erzeugt. Bei einer maximalen Länge L_{G1} des Gegenstandes 11, wie in der Fig. 2 dargestellt, liegt der Gegenstand 11 auf dem Wägeplattensegment 16 mit der Länge L_{W1} vollständig auf, wodurch die zugeordnete Wägezelle 21 ein Wägesignal erzeugt, was zur Ermittlung bzw. zur Erfassung des Gewichts bzw. der Gewichtskraft des entsprechenden Gegenstandes 11 mit der Länge L_{G1} vorgesehen ist. Bei einer Länge L_{G2} des Gegenstandes 11, wie in der Fig. 3 dargestellt, liegt der Gegenstand 11 auf den Wägeplattensegmenten 16 und 17 mit der Länge L_{W1} und L_{W2} vollständig auf, wodurch die Wägezelle 22 des Verbindungselements 24 ein Wägesignal erzeugt, was zur Ermittlung bzw. zur Erfassung des Gewichts bzw. der Gewichtskraft des entsprechenden Gegenstandes 11 mit der maximalen Länge L_{G2} vorgesehen ist.

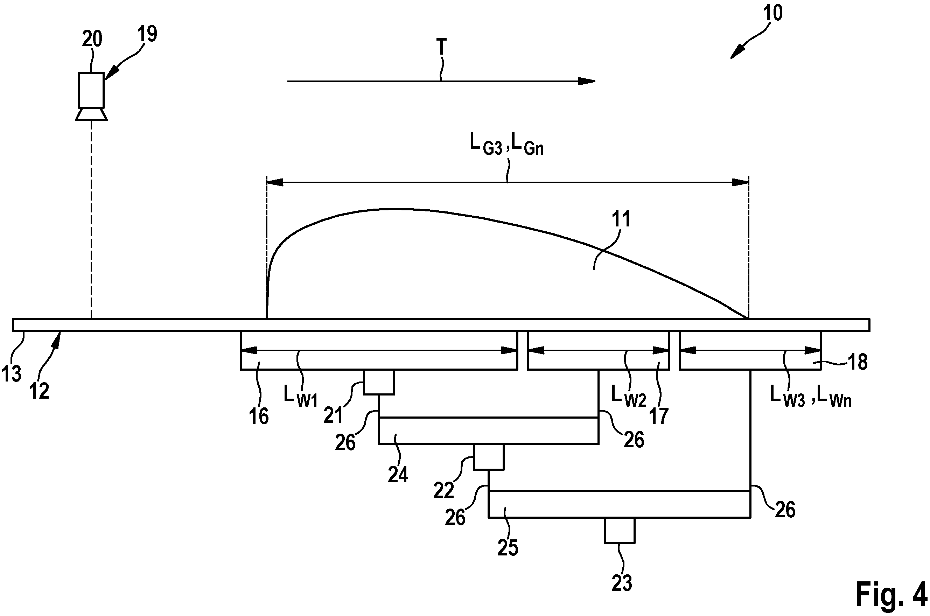

Vorzugsweise ist jedes weitere in Verlauf der Transportrichtung T nachgeordnete Wägeplattensegment 18 jeweils mittels eines weiteren mindestens eine Wägezelle 23 umfassenden Verbindungselements 25 zumindest mit dem vorherigen Verbindungselement 24 verbunden und zum Erzeugen eines Wägesignals eines Gegenstandes 11 mit einer maximalen Länge L_{G1} und/oder L_{G2} und/oder L_{Gn} ausgebildet und eingerichtet. In der Fig. 4 ist exemplarisch ein Gegenstand 11 mit der Länge L_{Gn} bzw. L_{G3} gezeigt, der vollständig auf den Wägeplattensegmenten 16, 17, 18 mit der Länge L_{W1}, L_{W2} und L_{Wn} bzw. L_{W3} aufliegt, wodurch die zugeordnete Wägezelle 23 des zweiten Verbindungselements 25 ein Wägesignal erzeugt, was zur Ermittlung bzw. zur Erfassung des Gewichts bzw. der Gewichtskraft des entsprechenden Gegenstandes 11 mit der Länge L_{G3} bzw. L_{Gn} vorgesehen ist. Sofern eine oder jede weitere potentiell vorhandene Wägezelle 21, 22 der Vorrichtung 10 ebenfalls ein Wägesignal erzeugt/erzeugen, ist diese Wägesignal bzw. sind diese Wägesignale zur Gewichtsermittlung nicht hinzuziehbar, da vorzugsweise das Gewicht des Gegenstandes 11 nur in Abhängigkeit der durch die Erfassungseinrichtung 19 ermittelten Länge jeweils mittels der korrespondierenden Wägezelle 21, 22, 23 ermittelbar ist.

In einer vorteilhaften Ausführungsform ist das erste und/oder das zweite in Verlauf der Transportrichtung T angeordnete Wägeplattensegment 16, 17 mit dem ersten in Verlauf der Transportrichtung T angeordneten Verbindungselement 24 mechanisch gelagert verbunden und zur Übertragung einer Gewichtskraft ausgebildet und eingerichtet. Weiter bevorzugt ist das in Transportrichtung T erste Verbindungselement 24 mit der Wägezelle 21 des ersten Wägeplattensegments 16 verbunden. In den Fig. 1 bis Fig. 4 ist jeweils eine Verbindung zwischen dem ersten Wägeplattensegment 16 und dem ersten Verbindungselement 24 dargestellt. Die Verbindung wird dabei durch eine direkte Verbindung zu der Wägezelle 21 des ersten Wägeplattensegments 16 erzeugt.

Vorzugsweise ist die Länge L_{G1} der Gegenstände 11 kleiner und/oder gleich der Länge L_{W1} des ersten Wägeplattensegments 16, und die Länge L_{G2} der Gegenstände 11 kleiner und/oder gleich der Länge L_{W1} + L_{W2} des ersten Wägeplattensegments 16 und des zweiten Wägeplattensegments 17, und die Länge L_{Gn} der Gegenstände 11 kleiner und/oder gleich der Länge L_{W1} + L_{W2} + L_{Wn} des ersten Wägeplattensegments 16, des zweiten Wägeplattensegments 17 und des oder jeden weiteren Wägeplattensegments 18. In den Fig. 1 bis Fig. 4 sind exemplarisch nur drei Wägeplattensegmente 16, 17, 18 gezeigt. In weiteren bevorzugten Ausführungen, die den Figuren jedoch nicht entnehmbar sind, kann eine Wägeplatte 15 mit mehr als drei Wägeplattensegmenten 16, 17, 18 mit jeweils einem Längenbereich L_{W1}, L_{W2}, L_{W3} vorgesehen sein, die zum Wiegen von Gegenständen 11 mit mehr als drei Längenbereichen L_{G1}, L_{G2}, L_{G3} ausgebildet und eingerichtet sind. Vorzugsweise umfasst die Wägeplatte 15 drei bis sieben Wägeplattensegmente 16, 17, 18, wobei ab dem in Verlauf der Transportrichtung T zweiten Wägeplattensegment 17, 18 jeweils ein Verbindungselement 24, 25 zur Verbindung mindestens eines Wägeplattensegments 16, 17, 18 mit dem Verbindungselement 24, 25 vorgesehen ist. Sofern also mehr als drei Wägeplattensegmente 16, 17, 18 vorgesehen sind, ist auch jeweils ein weiteres Verbindungselement 24, 25 zur Verbindung des zusätzlichen Wägeplattensegments und dem entsprechenden Verbindungselement vorgesehen.

Die drei in den Fig. 1 bis Fig. 4 gezeigten Wägeplattensegmente 16, 17, 18 weisen beispielsweise eine Länge von 600 mm, 200 mm und 200 mm auf. Derartige Längen sind insbesondere für einen Gegenstandslängenbereich von 200 mm bis 900 mm bei einer maximalen Bandgeschwindigkeit von 600 mm/s geeignet. Im Gegenstandslängenbereich von 200 mm bis einschließlich 500 mm wird nur das erste Wägeplattensegment 16 und damit die erste Wägezelle 21 betrachtet. Im Längenbereich ab 500 mm bis einschließlich 700 mm werden die beiden ersten Wägeplattensegmente 16, 17 und damit die zweite Wägezelle 22 des ersten Verbindungselements 24 betrachtet. Und im Längenbereich ab 700 mm bis einschließlich 900 mm der Gegenstände 11 werden alle drei Wägeplattensegmente 16, 17, 18 und nur die dritte Wägezelle 23 des zweiten Verbindungselements 25 betrachtet. Wie in den Fig. 2 bis Fig. 4 angedeutet, sind die Gegenstände 11 vorzugsweise Fischfilets mit einer Länge von 200 mm bis 900 mm.

Die in den Fig. 1 bis Fig. 4 schematisch gezeigte Erfassungseinheit 20 ist bevorzugt als ein Scansystem ausgebildet und eingerichtet, wobei das Scansystem vorzugsweise mindestens eine Kamera und/oder mindestens eine Lasermesseinrichtung umfasst. Weiter bevorzugt kann die Erfassungseinheit 20 auch als Lichtschranke, Bewegungssensor etc. ausgebildet und eingerichtet sein, vorzugsweise auf der Höhe der zu wiegenden Gegenstände 11 angeordnet. In den Fig. 1 bis Fig. 4 sind stilisiert mögliche Strahlungen, Wellen oder dergleichen als Punkte dargestellt, die den Vorgang der Erfassung während der Längenermittlung aufzeigen sollen.

Die Verbindungselemente 24, 25 befinden sich vorzugsweise in jeweils einer weiteren Ebene unterhalb der Wägeplattensegmente 16, 17, 18. In bevorzugten Ausführungsformen ist mindestens eines der Verbindungselemente 24, 25 plattenförmig ausgebildet und eingerichtet. In den Fig. 1 bis Fig. 4 sind die Verbindungselemente 24, 25 jeweils plattenförmig ausgebildet, um eine zuverlässige Kraftaufnahme und Übertragung zu gewährleisten. Vorzugsweise ist die Verbindung zwischen mindestens eines der Verbindungselemente 24, 25 und mindestens eines der Wägeplattensegmente 16, 17, 18 mittels mindestens zwei im Wesentlichen parallel zueinander verlaufenden Lastelementen 26 ausgebildet und eingerichtet. Die im Wesentlichen parallel zueinander verlaufenden Lastelemente 26 sind dabei in einer vorteilhaften Ausgestaltung im Wesentlichen orthogonal zu dem Transportelement 13 ausgebildet und eingerichtet. Weiter bevorzugt sind die Lastelemente 26 ebenfalls im Wesentlichen orthogonal zu der Wägeplatte 15 ausgebildet und eingerichtet. Das Transportelement 13 und die Wägeplatte 15 sind vorzugsweise im Wesentlichen parallel zueinander angeordnet.

Eine weitere vorteilhafte Ausführungsform der erfindungsgemäßen Vorrichtung 10 zeichnet sich dadurch aus, dass in Abhängigkeit der durch die Erfassungseinheit 20 erfassten Länge L_{G1}, L_{G2}, L_{Gn} des Gegenstandes 11 das entsprechende Wägesignal der korrespondierenden Länge L_{W1}, L_{W1} + L_{W2} bzw. L_{W1} + L_{W2} + L_{Wn} der Wägeplattensegmente 16, 17, 18 zur Gewichtsermittlung verwendbar ist. In den Fig. 2 bis Fig. 4 ist somit jeweils nur das Wägesignal der entsprechenden Wägezelle 21, 22, 23 für Gewichtsermittlung hinzuzuziehen, das den entsprechenden Gegenstand 11 vollständig erfasst.

In einer vorteilhaften Ausführungsform der erfindungsgemäßen Vorrichtung 10 ist die Transportgeschwindigkeit in Abhängigkeit der Länge L_{G1}, L_{G2}, L_{Gn} der Gegenstände 11 und/oder der Länge L_{W1}, L_{W2}, L_{Wn} der Wägeplattensegmente 16, 17, 18 steuer- und/ oder regelbar ausgebildet und eingerichtet. Die Transportgeschwindigkeit ist insbesondere mittels der Transporteinrichtung 12 steuer- und/oder regelbar. Die Vorrichtung 10 bzw. die Transporteinrichtung 12 kann hierzu weitere Mittel umfassen, beispielsweise Antriebs- und/oder Steuerungseinheiten, um eine veränderbare Transportgeschwindigkeit der Gegenstände 11 bereitzustellen. Hierzu umfasst die Vorrichtung 10 weiter bevorzugt mindestens eine - in den Figuren nicht näher dargestellte - Regel- und/oder Steuerungseinheit. Weiter bevorzugt sind die Gegenstände 10 mit einem Abstand zueinander auf das Transportelement 13 anordenbar, wobei der Abstand zueinander abhängig von der Länge L_{G1}, L_{G2}, L_{Gn} der Gegenstände 11 und/oder der Länge L_{W1}, L_{W2}, L_{Wn} der Wägeplattensegmente 16,17, 18 und/oder der Transportgeschwindigkeit einstellbar ausgebildet und eingerichtet ist. Die Vorrichtung 10 kann hierzu bevorzugt eine - nicht gezeigte - Zuführungseinrichtung umfassen, um die Gegenstände 11 in Abhängigkeit zu ihrer erfassten Länge, der Transportgeschwindigkeit und/oder der Länge der Wägeplattensegmente 16, 17, 18 auf dem Transportelement 13 bereitzustellen. Vorteilhafterweise kann der Abstand zwischen den Gegenständen 11 unabhängig von der Länge der Gegenstände 11 L_{G1}, L_{G2}, L_{Gn} und/oder der Länge L_{W1}, L_{W2}, L_{Wn} der Wägeplattensegmente 16, 17, 18 und/oder von der Transportgeschwindigkeit im Wesentlich konstant einstellbar ausgebildet und eingerichtet sein.

In einer vorteilhaften Ausführungsform sind die Längen L_{W1}, L_{W2}, Lwn der Wägeplattensegmente 16, 17, 18 entsprechend einer Häufigkeitsverteilung möglicher auftretender Längen L_{G1}, L_{G2}, L_{Gn} der zu wiegenden Gegenstände 11 ausgebildet und eingerichtet, wobei die Häufigkeitsverteilung aus bekannten, vorbestimmten und/oder geschätzten Parametern gebildet ist. Weiter bevorzugt ist sind die Längen L_{W1}, L_{W2}, Lwn der Wägeplattensegmente 16, 17, 18 in Abhängigkeit der vorgesehenen Transportgeschwindigkeit ausgebildet und eingerichtet.

Im Folgenden wird das Verfahren anhand der Zeichnung näher erläutert. Das Verfahren dient zum Wiegen von Gegenständen 11 unterschiedlicher Länge L_{G1}, L_{G2}, L_{Gn}, insbesondere von Lebensmitteln, umfassend die Schritte Transportieren der Gegenstände 11 mit einer Transportgeschwindigkeit entlang einer Transportrichtung T mittels einer Transporteinrichtung 12 mit mindestens einem Transportelement 13, Ermitteln des Gewichts der mittels der Transporteinrichtung 12 transportierten Gegenstände 11 durch eine Wägeeinrichtung 13, wobei die Wägeeinrichtung 13 eine Wägeplatte 15, umfassend mindestens zwei separate, unterhalb des mindestens einen Transportelements 13 in Transportrichtung T hintereinander angeordnete Wägeplattensegmente 16, 17, 18, umfasst, wobei die mindestens zwei Wägeplattensegmente 16, 17, 18 jeweils eine Länge L_{W1}, L_{W2}, Lwn aufweisen, Erfassen der Länge L_{G1}, L_{G2}, L_{Gn} der Gegenstände 11 mittels einer der Wägeeinrichtung 13 in Transportrichtung T vorgelagerten Erfassungseinrichtung 19 mit mindestens einer Erfassungseinheit 20.

Dieses Verfahren zeichnet sich erfindungsgemäß dadurch aus, dass das Wägesignal eines Gegenstandes 11 einer maximalen Länge L_{G1} mittels einer in Verlauf der Transportrichtung T ersten Wägeplattensegments 16 umfassenden Wägezelle 21 erzeugt wird, und dass ein Wägesignal eines Gegenstandes 11 einer maximalen Länge L_{G1} und/oder L_{G2} mittels des in Verlauf der Transportrichtung T dem ersten Wägeplattensegment 16 nachgeordneten mindestens eine Wägezelle 22 umfassenden Wägeplattensegment 17 erzeugt wird, wobei das erste Wägeplattensegment 16 mit dem nachgeordneten Wägeplattensegment 17 mittels eines Verbindungselements 24 verbunden ist. Durch das Verbindungselement 24 wird die Kraft von dem ersten Wägeplattensegment 16 und dem zweiten Wägeplattensegment 25 gemeinsam aufgenommen, um in der Wägezelle 22 des Verbindungselements 24 erfasst zu werden. Die Gegenstände 11 mit der Länge L_{G2}, die größer sind als das erste Wägeplattensegment 16 können somit mittels des Verfahrens gewogen werden. Das Verfahren ist insbesondere durch die Fig. 3 dargestellt.

Vorzugsweise wird ein Wägesignal eines Gegenstandes 11 einer maximalen Länge L_{G1} und/oder L_{G2} und/oder L_{Gn} mittels jedes weiteren in Verlauf der Transportrichtung T mindestens eine Wägezelle 21, 22, 23 umfassenden nachgeordneten Wägeplattensegments 16, 17, 18 erzeugt, wobei jedes weitere Wägeplattensegment 18 jeweils ein Verbindungselement 25 umfasst und mit dem vorherigen Verbindungselement 24 verbunden ist. In den Fig. 1 bis Fig. 4 ist jeweils ein allgemeiner Aufbau einer Vorrichtung 10 zur Ausführung des erfindungsgemäßen Verfahrens gezeigt, welches drei Wägeplattensegmente 16, 17, 18 und zwei Verbindungselemente 24, 25 umfasst. Die Gegenstände 10 werden in Transportrichtung T mit einer Transportgeschwindigkeit mittels des Transportelements 13 über die Wägeplatte 15 transportiert. Dabei wird zunächst mittels der Erfassungseinheit 20 die Länge der Gegenstände 11 erfasst, um eine Gewichtsermittlung mittels der entsprechenden Wägezelle 16, 17, 18 in Abhängigkeit der Länge L_{G1}, L_{G2}, L_{Gn} der Gegenstände 11 auszuführen. Bevorzugterweise sind die Gegenstände 11 Fischfilets mit einer Länge von 200 mm bis 900 mm.

Vorzugsweise ist das erste und/oder das zweite in Verlauf der Transportrichtung T angeordnete Wägeplattensegment 16, 17 mit dem ersten in Verlauf der Transportrichtung T angeordneten Verbindungselement 24 mechanisch gelagert verbunden, wobei eine Gewichtskraft übertragen wird. Die Fig. 1 bis Fig. 4 zeigen jeweils schematisch entsprechende Verbindungen. Weiter bevorzugt ist das in Transportrichtung T erste Verbindungselement 24 mit der Wägezelle 21 des ersten Wägeplattensegments 16 verbunden. Vorzugsweise ist mindestens eines der Verbindungselemente 24, 25 und mindestens eines der Wägeplattensegmente 16, 17, 18 mittels mindestens zwei im Wesentlichen parallel verlaufender Lastelemente 26 verbunden.

Eine weitere vorteilhafte Ausführungsform des Verfahrens zeichnet sich dadurch aus, dass die Länge L_{G1} der Gegenstände 11 kleiner und/oder gleich der Länge L_{W1} des ersten Wägeplattensegments 16 ist, und dass die Länge L_{G2} der Gegenstände 11 kleiner und/oder gleich der Länge L_{W1} + L_{W2} des ersten Wägeplattensegments 16 und des zweiten Wägeplattensegments 17 ist, und dass die Länge L_{Gn} der Gegenstände 11 kleiner und/oder gleich der Länge L_{W1} + L_{W2} + L_{Wn} des ersten Wägeplattensegments 16, des zweiten Wägeplattensegments 17 und des oder jeden weiteren Wägeplattensegments 18 ist.

Weiter bevorzugt wird in Abhängigkeit der durch die Erfassungseinheit 20 erfassten Länge L_{G1}, L_{G2}, L_{Gn} des Gegenstandes 11 das entsprechende Wägesignal der korrespondierenden Länge L_{W1}, L_{W1} + L_{W2} bzw. L_{W1} + L_{W2} + Lwn der Wägeplattensegmente 16, 17, 18 zur Gewichtsermittlung verwendet. In einer weiteren vorteilhaften Ausführung wird die Transportgeschwindigkeit in Abhängigkeit der Länge L_{G1}, L_{G2}, L_{Gn} der Gegenstände 11 und/oder der Länge L_{W1}, L_{W2}, L_{Wn} der Wägeplattensegmente 16, 17, 18 gesteuert und/oder geregelt. Die Gegenstände 11 können zudem mit einem Abstand zueinander auf das Transportelement 13 angeordnet werden, wobei der Abstand zueinander abhängig von der Länge L_{G1}, L_{G2}, L_{Gn} der Gegenstände 11 und/oder der Länge L_{W1}, L_{W2}, L_{Wn} der Wägeplattensegmente 16, 17, 18 und/oder der Transportgeschwindigkeit eingestellt wird. Vorzugsweise wird der Abstand zwischen den Gegenständen 11 unabhängig von der Länge der Gegenstände 11 L_{G1}, L_{G2}, L_{Gn} und/oder der Länge L_{W1}, L_{W2}, L_{Wn} der Wägeplattensegmente 16, 17, 18 und/oder von der Transportgeschwindigkeit im Wesentlich konstant eingestellt.

## Patentansprüche

1. Vorrichtung (10), ausgebildet und eingerichtet zum Wiegen von Gegenständen (11) unterschiedlicher Länge L_{G1}, L_{G2}, L_{Gn}, insbesondere von Lebensmitteln, umfassend
eine Transporteinrichtung (12) mit mindestens einem Transportelement (13), ausgebildet und eingerichtet zum Transportieren der Gegenstände (11) mit einer Transportgeschwindigkeit in eine Transportrichtung T,
eine unterhalb des mindestens einen Transportelements (13) angeordnete Wägeeinrichtung (14), ausgebildet und eingerichtet zur Ermittlung des Gewichts des mittels der Transporteinrichtung (12) transportierten Gegenstandes (11), wobei die Wägeeinrichtung (14) eine Wägeplatte (15), umfassend mindestens zwei separate, unterhalb des mindestens einen Transportelements (13) in Transportrichtung T hintereinander angeordnete Wägeplattensegmente (16, 17, 18), umfasst, wobei die mindestens zwei Wägeplattensegmente (16, 17, 18) jeweils eine Länge L_{W1}, L_{W2}, L_{Wn} aufweisen,
eine der Wägeeinrichtung (14) in Transportrichtung T vorgelagerte Erfassungseinrichtung (19) mit mindestens einer Erfassungseinheit (20), ausgebildet und eingerichtet zumindest zum Erfassen der Länge L_{G1}, L_{G2}, L_{Gn} der Gegenstände (11),
**dadurch gekennzeichnet, dass**
das in Verlauf der Transportrichtung T erste Wägeplattensegment (16) mindestens eine Wägezelle (21) umfasst und zum Erzeugen eines Wägesignals eines Gegenstandes (11) mit einer maximalen Länge L_{G1} ausgebildet und eingerichtet ist, und **dass**
das weitere in Verlauf der Transportrichtung T dem ersten Wägeplattensegment (16) nachgeordnete Wägeplattensegment (17) mittels eines mindestens eine Wägezelle (22) umfassenden Verbindungselements (24) mit dem ersten Wägeplattensegment (16) verbunden ist, und zum Erzeugen eines Wägesignals eines Gegenstandes (11) mit einer maximalen Länge L_{G1} und/oder L_{G2} ausgebildet und eingerichtet ist.

2. Vorrichtung (10) nach Anspruch 1, **dadurch gekennzeichnet, dass** jedes weitere in Verlauf der Transportrichtung T nachgeordnete Wägeplattensegment (18) jeweils mittels eines weiteren mindestens eine Wägezelle (22) umfassenden Verbindungselements (25) zumindest mit dem vorherigen Verbindungselement (24) verbunden ist, und zum Erzeugen eines Wägesignals eines Gegenstandes (11) mit einer maximalen Länge L_{G1} und/oder L_{G2} und/oder L_{Gn} ausgebildet und eingerichtet ist.

3. Vorrichtung (10) nach Anspruch 1 oder 2, **dadurch gekennzeichnet, dass** das erste und/oder das zweite in Verlauf der Transportrichtung T angeordnete Wägeplattensegment (16, 17) mit dem ersten in Verlauf der Transportrichtung T angeordneten Verbindungselement (24) mechanisch gelagert verbunden ist und zur Übertragung einer Gewichtskraft ausgebildet und eingerichtet ist.

4. Vorrichtung (10) nach einem oder mehreren der Ansprüche 1 bis 3, **dadurch gekennzeichnet, dass** das in Transportrichtung T erste Verbindungselement (24) mit der Wägezelle (21) des ersten Wägeplattensegments (16) verbunden ist.

5. Vorrichtung (10) nach einem oder mehreren der Ansprüche 1 bis 4, **dadurch gekennzeichnet, dass** die Länge L_{G1} der Gegenstände (11) kleiner und/oder gleich der Länge L_{W1} des ersten Wägeplattensegments (16) ist, und dass die Länge L_{G2} der Gegenstände (11) kleiner und/oder gleich der Länge L_{W1} + L_{W2} des ersten Wägeplattensegments (16) und des zweiten Wägeplattensegments (17) ist, und dass die Länge L_{Gn} der Gegenstände (11) kleiner und/oder gleich der Länge L_{W1} + L_{W2} + L_{Wn} des ersten Wägeplattensegments (16), des zweiten Wägeplattensegments (17) und des oder jeden weiteren Wägeplattensegments (18) ist.

6. Vorrichtung (10) nach einem oder mehreren der Ansprüche 1 bis 5, **dadurch gekennzeichnet, dass** die Wägeplatte (15) drei bis sieben Wägeplattensegmente (16, 17, 18) umfasst, wobei ab dem in Verlauf der Transportrichtung T zweiten Wägeplattensegment (16, 17) jeweils ein Verbindungselement (24, 25) zur Verbindung mindestens eines Wägeplattensegments (16, 17, 18) mit dem Verbindungselement (24, 25) vorgesehen ist.

7. Vorrichtung (10) nach einem oder mehreren der Ansprüche 1 bis 6, **dadurch gekennzeichnet, dass** die Erfassungseinheit (20) als ein Scansystem ausgebildet und eingerichtet ist, wobei das Scansystem vorzugsweise mindestens eine Kamera und/oder mindestens eine Lasermesseinrichtung umfasst.

8. Vorrichtung (10) nach einem oder mehreren der Ansprüche 1 bis 7, **dadurch gekennzeichnet, dass** mindestens eines der Verbindungselemente (24, 25) plattenförmig ausgebildet und eingerichtet ist.

9. Vorrichtung (10) nach einem oder mehreren der Ansprüche 1 bis 8, **dadurch gekennzeichnet, dass** die Verbindung zwischen mindestens eines der Verbindungselemente (24, 25) und mindestens eines der Wägeplattensegmente (16, 17, 18) mittels mindestens zwei im Wesentlichen parallel zueinander verlaufender Lastelemente (26) ausgebildet und eingerichtet sind.

10. Vorrichtung (10) nach einem oder mehreren der Ansprüche 1 bis 9, **dadurch gekennzeichnet, dass** die im Wesentlichen parallel zueinander verlaufenden Lastelemente (26) im Wesentlichen orthogonal zu dem Transportelement (13) ausgebildet und eingerichtet sind.

11. Vorrichtung (10) nach einem oder mehreren der Ansprüche 1 bis 10, **dadurch gekennzeichnet, dass** die Gegenstände (11) Fischfilets mit einer Länge von 200 mm bis 900 mm sind.

12. Vorrichtung (10) nach einem oder mehreren der Ansprüche 1 bis 11, **dadurch gekennzeichnet, dass** in Abhängigkeit der durch die Erfassungseinheit (20) erfassten Länge L_{G1}, L_{G2}, L_{Gn} des Gegenstandes (11) das entsprechende Wägesignal der korrespondierenden Länge L_{W1}, L_{W1} + L_{W2} bzw. L_{W1} + L_{W2} + Lwn der Wägeplattensegmente (16, 17, 18) zur Gewichtsermittlung verwendbar ist.

13. Vorrichtung (10) nach einem oder mehreren der Ansprüche 1 bis 12, **dadurch gekennzeichnet, dass** die Transportgeschwindigkeit in Abhängigkeit der Länge L_{G1}, L_{G2}, L_{Gn} der Gegenstände (11) und/oder der Länge L_{W1}, L_{W2}, L_{Wn} der Wägeplattensegmente (16, 17, 18) steuer- und/oder regelbar ausgebildet und eingerichtet ist.

14. Vorrichtung (10) nach einem oder mehreren der Ansprüche 1 bis 13, **dadurch gekennzeichnet, dass** die Gegenstände (11) mit einem Abstand zueinander auf das Transportelement (13) anordenbar sind, wobei der Abstand zueinander abhängig von der Länge L_{G1}, L_{G2}, L_{Gn} der Gegenstände (11) und/oder der Länge L_{W1}, L_{W2}, Lwn der Wägeplattensegmente (16, 17, 18) und/oder der Transportgeschwindigkeit einstellbar ausgebildet und eingerichtet ist.

15. Vorrichtung (10) nach Anspruch 14, **dadurch gekennzeichnet, dass** der Abstand zwischen den Gegenständen (11) unabhängig von der Länge der Gegenstände (11) L_{G1}, L_{G2}, L_{Gn} und/oder der Länge L_{W1}, L_{W2}, L_{Wn} der Wägeplattensegmente (16, 17, 18) und/oder von der Transportgeschwindigkeit im Wesentlich konstant einstellbar ausgebildet und eingerichtet ist.

16. Verfahren zum Wiegen von Gegenständen (11) unterschiedlicher Länge L_{G1}, L_{G2}, L_{Gn}, insbesondere von Lebensmitteln, umfassend die Schritte:
- Transportieren der Gegenstände (11) mit einer Transportgeschwindigkeit entlang einer Transportrichtung T mittels einer Transporteinrichtung (12) mit mindestens einem Transportelement (13),
- Ermitteln des Gewichts der mittels der Transporteinrichtung (12) transportierten Gegenstände (11) durch eine Wägeeinrichtung (14), wobei die Wägeeinrichtung (14) eine Wägeplatte (15), umfassend mindestens zwei separate, unterhalb des mindestens einen Transportelements (13) in Transportrichtung T hintereinander angeordnete Wägeplattensegmente (16, 17, 18), umfasst, wobei die mindestens zwei Wägeplattensegmente (16, 17, 18) jeweils eine Länge L_{W1}, L_{W2}, L_{Wn} aufweisen,
- Erfassen der Länge L_{G1}, L_{G2}, L_{Gn} der Gegenstände (11) mittels einer der Wägeeinrichtung (14) in Transportrichtung T vorgelagerten Erfassungseinrichtung (19) mit mindestens einer Erfassungseinheit (20),
**dadurch gekennzeichnet, dass**
das Wägesignal eines Gegenstandes (11) einer maximalen Länge L_{G1} mittels einer in Verlauf der Transportrichtung T ersten Wägeplattensegments (16) umfassenden Wägezelle (21) erzeugt wird, und **dass**
ein Wägesignal eines Gegenstandes (11) einer maximalen Länge L_{G1} und/oder L_{G2} mittels des in Verlauf der Transportrichtung T dem ersten Wägeplattensegment (16) nachgeordneten mindestens eine Wägezelle (22) umfassenden Wägeplattensegment (17) erzeugt wird, wobei das erste Wägeplattensegment (16) mit dem nachgeordneten Wägeplattensegment (17) mittels eines Verbindungselements (24) verbunden ist.

17. Verfahren nach Anspruch 16, **dadurch gekennzeichnet, dass** ein Wägesignal eines Gegenstandes (11) einer maximalen Länge L_{G1} und/oder L_{G2} und/oder L_{Gn} mittels jedes weiteren in Verlauf der Transportrichtung T mindestens eine Wägezelle (23) umfassenden nachgeordneten Wägeplattensegments (18) erzeugt wird, wobei jedes weitere Wägeplattensegment (18) jeweils ein Verbindungselement (25) umfasst und mit dem vorherigen Verbindungselement (24) verbunden ist.

18. Verfahren nach Anspruch 16 oder 17, **dadurch gekennzeichnet, dass** das erste und/oder das zweite in Verlauf der Transportrichtung T angeordnete Wägeplattensegment (16, 17) mit dem ersten in Verlauf der Transportrichtung T angeordneten Verbindungselement (24) mechanisch gelagert verbunden ist, wobei eine Gewichtskraft übertragen wird.

19. Verfahren nach einem oder mehreren der Ansprüche 16 bis 18, **dadurch gekennzeichnet, dass** das in Transportrichtung T erste Verbindungselement (24) mit der Wägezelle (21) des ersten Wägeplattensegments (16) verbunden ist.

20. Verfahren nach einem oder mehreren der Ansprüche 16 bis 19, **dadurch gekennzeichnet, dass** die Länge L_{G1} der Gegenstände (11) kleiner und/oder gleich der Länge L_{W1} des ersten Wägeplattensegments (16) ist, und dass die Länge L_{G2} der Gegenstände (11) kleiner und/oder gleich der Länge L_{W1} + L_{W2} des ersten Wägeplattensegments (16) und des zweiten Wägeplattensegments (17) ist, und dass die Länge L_{Gn} der Gegenstände (11) kleiner und/oder gleich der Länge L_{W1} + L_{W2} + Lwn des ersten Wägeplattensegments (16), des zweiten Wägeplattensegments (17) und des oder jeden weiteren Wägeplattensegments (18) ist.

21. Verfahren nach einem oder mehreren der Ansprüche 16 bis 20, **dadurch gekennzeichnet, dass** mindestens eines der Verbindungselemente (24, 25) und mindestens eines der Wägeplattensegmente (16, 17, 18) mittels mindestens zwei im Wesentlichen parallel verlaufender Lastelemente (26) verbunden sind.

22. Verfahren nach einem oder mehreren der Ansprüche 16 bis 21, **dadurch gekennzeichnet, dass** die Gegenstände (11) Fischfilets mit einer Länge von 200 mm bis 900 mm sind.

23. Verfahren nach einem oder mehreren der Ansprüche 16 bis 22, **dadurch gekennzeichnet, dass** in Abhängigkeit der durch die Erfassungseinheit (20) erfassten Länge L_{G1}, L_{G2}, L_{Gn} des Gegenstandes (11) das entsprechende Wägesignal der korrespondierenden Länge L_{W1}, L_{W1} + L_{W2} bzw. L_{W1} + L_{W2} + L_{Wn} der Wägeplattensegmente (16, 17, 18) zur Gewichtsermittlung verwendet wird.

24. Verfahren nach einem oder mehreren der Ansprüche 16 bis 23, **dadurch gekennzeichnet, dass** die Transportgeschwindigkeit in Abhängigkeit der Länge L_{G1}, L_{G2}, L_{Gn} der Gegenstände (11) und/oder der Länge L_{W1}, L_{W2}, L_{Wn} der Wägeplattensegmente (16, 17, 18) gesteuert und/oder geregelt wird.

25. Verfahren nach einem oder mehreren der Ansprüche 16 bis 24, **dadurch gekennzeichnet, dass** die Gegenstände (11) mit einem Abstand zueinander auf das Transportelement (13) angeordnet werden, wobei der Abstand zueinander abhängig von der Länge L_{G1}, L_{G2}, L_{Gn} der Gegenstände (11) und/oder der Länge L_{W1}, L_{W2}, Lwn der Wägeplattensegmente (16, 17, 18) und/oder der Transportgeschwindigkeit eingestellt wird.

26. Verfahren nach einem oder mehreren der Ansprüche 16 bis 25, **dadurch gekennzeichnet, dass** der Abstand zwischen den Gegenständen (11) unabhängig von der Länge der Gegenstände (11) L_{G1}, L_{G2}, L_{Gn} und/oder der Länge L_{W1}, L_{W2}, L_{Wn} der Wägeplattensegmente (16, 17, 18) und/oder von der Transportgeschwindigkeit im Wesentlich konstant eingestellt wird.
